# EUROPÄISCHE PATENTSCHRIFT

(11) **EP 2 621 000 B1**
(45) Veröffentlichungstag und Bekanntmachung des Hinweises auf die Patenterteilung: **17.10.2018**
(21) Anmeldenummer: 13152682.4
(22) Anmeldetag: 25.01.2013
(51) Int. Cl.: H01G 11/30, H01G 11/36, H01M 4/04, H01M 4/36, H01M 4/62, H01M 10/0525

(54) **Verfahren zur Herstellung einer Suspension sowie Elektrode**
Process for preparing a suspension and electrode
Procédé de fabrication d'une suspension et électrode

(30) Priorität: 27.01.2012 DE 102012001561
(43) Veröffentlichungstag der Anmeldung: 31.07.2013
(73) Patentinhaber: Future Carbon GmbH, 95448 Bayreuth (DE)
(72) Erfinder: Kreis, Martin, 95444 Bayreuth (DE)
(74) Vertreter: Müller, Christian Stefan Gerd

(56) Entgegenhaltungen:
- EP-A1- 2 178 139
- US-B1- 7 828 619
- QIAO Y Q ET AL: "Enhanced electrochemical performances of multi-walled carbon nanotubes modified LiV(PO)/C cathode material for lithium-ion batteries", JOURNAL OF ALLOYS AND COMPOUNDS, ELSEVIER SEQUOIA, LAUSANNE, CH, Bd. 509, Nr. 25, 7. April 2011 (2011-04-07), Seiten 7181-7185, XP028215960, ISSN: 0925-8388, DOI: 10.1016/J.JALLCOM.2011.04.048 [gefunden am 2011-04-15]
- LIN Z ET AL: "One-step synthesis of Li4Ti5O12/C anode material with high performance for lithium-ion batteries", SOLID STATE IONICS, NORTH HOLLAND PUB. COMPANY. AMSTERDAM; NL, NL, Bd. 181, Nr. 8-10, 29. März 2010 (2010-03-29), Seiten 412-415, XP026960722, ISSN: 0167-2738 [gefunden am 2010-02-18]

## Beschreibung

Die vorliegende Erfindung betrifft zunächst ein Verfahren zur Herstellung einer Suspension für die Herstellung von Elektroden sowie ein Verfahren zur Herstellung einer Elektrode. Weiterhin betrifft die Erfindung eine Elektrode sowie eine Reihe besonderer Verwendungen.

Eine Lithium-Ionen Zelle beinhaltet typischerweise eine Kathode, eine Anode und einen Elektrolyten, zudem meist einen Separator, Stromableiter und dergleichen. Für die Kapazität des Gesamtsystems ist es wichtig, dass Anode und Kathode möglichst hohe spezifische Kapazitäten aufweisen und dass die beiden Elektroden einen möglichst hohen Anteil im Gesamtgewicht beziehungsweise im Gesamtvolumen der Zelle ausmachen. Eine hohe erreichbare Leistung dagegen setzt eine gute elektronische Leitfähigkeit in den Elektroden voraus, damit die Energie ohne Beschädigung der Zelle möglichst schnell aufgenommen oder abgegeben werden kann. Eine hohe spezifische Leistung geht somit einher mit einer hohen Strombelastbarkeit. Zur Charakterisierung hat sich unter anderem die Methode des Ratentests etabliert, bei der die Kapazität einer Zelle in Abhängigkeit der Lade- und/oder Entladegeschwindigkeit gemessen wird. Angestrebt wird dabei ein möglichst geringer Abfall der Kapazität, wenn die Lade- und/oder Entladegeschwindigkeit erhöht wird. Ein wichtiges Kriterium ist weiterhin die Zyklenstabilität, wobei ein Zyklus einen Lade- und einen Entladevorgang beinhaltet. Unter einer hohen Zyklenstabilität versteht man eine nahezu konstante Kapazität der Zelle beim Durchlaufen vieler Zyklen.

Dem Elektrolyten wird ein geeignetes Lithium-Salz zugegeben, das in Lithium-Ionen und entsprechende Gegenionen zerfällt. Während des Ladens werden Lithium-Ionen aus der Kathode in den Elektrolyten abgegeben. Ebenso werden Lithium-Ionen aus dem Elektrolyten in die Anode eingelagert. Beim Entladevorgang findet der entgegengesetzte Prozess statt. Häufig, aber nicht immer, sind die aktiven Elektrodenmaterialien Schichtmaterialien, zwischen deren einzelne Lagen die Lithium-Ionen interkalieren können. Es sind allerdings auch Materialien mit anderen Strukturen und anderen Interkalationsmechanismen bekannt.

Die meisten Kathodenmaterialien für Lithium-Ionen-Zellen sind Lithium-MetallVerbindungen, von denen eine große Zahl bekannt ist und auch eingesetzt wird. Diese Verbindungen sind sehr schlechte elektronische Leiter, daher ist der Einsatz von Additiven zur Verbesserung der Leitfähigkeit unabdingbar. Auf der Anode von Lithium-Ionen-Zellen werden meist Kohlenstoffe verwendet, beispielsweise spezielle Graphite oder synthetische Kohlenstoffe. Diese besitzen bereits eine intrinsische elektronische Leitfähigkeit, jedoch können die einzelnen Partikel in der Elektrode während der Zyklisierung den Kontakt zueinander verlieren und damit für die Interkalation verloren gehen. Dieser Effekt kann auch auf der Kathode auftreten. Aus den genannten Gründen werden in der Kathode immer und in der Anode häufig Leitfähigkeitsadditive eingesetzt.

Metalle kommen als Leitfähigkeitsadditive unter anderem wegen ihres Preises und/oder wegen ihrer katalytischen Wirkung nicht in Frage. Daher werden für diese Aufgabe nahezu ausschließlich Kohlenstoffe eingesetzt. Klassischerweise sind dies Ruße und spezielle Graphite, in neuerer Zeit wurden aber auch Kohlenstoff-Nanotubes, Fullerene, Graphen und ähnliche Materialien vorgeschlagen.

Die verwendeten Ruße sind sehr reine Ruße, deren Primärpartikel zu Sekundär- und Tertiärstrukturen agglomeriert sind. Durch diese Strukturen soll gewährleistet werden, dass mit akzeptablen Zuschlägen die Perkolation und damit eine gute Leitfähigkeit erreicht werden kann. Die Primärpartikel sind näherungsweise sphärisch, wogegen die Agglomerate ein Aspektverhältnis deutlich größer 1 haben können. Aufgrund der Fragilität der Überstrukturen dürfen die Ruße nicht unter hoher Scherung dispergiert werden, wenn sie eine gute Wirkung erzielen sollen.

Auch die verwendeten Graphite sind sehr rein und für Graphite relativ feinteilig. Sie agglomerieren allerdings nicht wie die Ruße zu Überstrukturen, können jedoch schon als Einzelpartikel Aspektverhältnisse deutlich größer 1 haben. Auch Scherkräfte sind für diese Materialien im Allgemeinen nicht schädlich.

Sowohl Ruße als auch Graphite werden den Batterieherstellern üblicherweise als Pulver zur Verfügung gestellt und von diesen den Elektrodenslurries zugesetzt und mit einfachen Rührmethoden untergemischt.

Zum Einsatz von Kohlenstoff-Nanotubes in Lithium-Ionen-Batterien gibt es relativ umfangreiche Literatur. Ein Aspekt ist hierbei der Einsatz als anodenseitiges Aktivmaterial, der aber im hier dargestellten Zusammenhang nicht von Bedeutung ist. Doch auch der Einsatz als Leitfähigkeitsadditiv wurde bereits vielfach beschrieben. Allerdings werden hier Nanotubes und Aktivmaterialien nacheinander zugegeben und mit einfachen Methoden wie Rührwerken oder Ultraschall vermischt. Dies ist beispielsweise beschrieben bei "S. Lee, J. Park, P. Park, J. Kim, S. Ahn, K. Lee, J. Park, D. Kim and Y. Jeong, J. Solid State Electrochem. 14 (2010) 951", oder bei "J. Park, S. Lee, J. Kim, S. Ahn, J. Park and Y. Jeong, J. Solid State Electrchem. 14 (2010) 593". Dadurch wird nur eine schlechte Anbindung der Nanotubes an die Aktivmaterialien erzielt und/oder die Nanotube-Agglomerate werden nicht aufgebrochen und das Potential der Nanotubes zur Verbesserung der elektronischen Leitfähigkeit in der Elektrode bei gleichzeitig geringer Konzentration kann nicht voll ausgeschöpft werden.

Auch kommerziell erhältliche Produkte zum Einsatz von Nanotubes als Leitfähigkeitsadditiv in Lithium-Ionen-Batterien werden als Dispersion dargereicht, die aus Nanotubes, Lösungsmittel und gegebenenfalls einem Dispergiermittel besteht. Daher weisen auch solche Dispersionen die oben beschriebenen Nachteile auf.

Zudem müssen sie, um noch fließfähig zu sein, so niedrig konzentriert sein, dass im späteren Prozess ein hoher Gesamt-Feststoffgehalt nicht mehr darstellbar ist.

Eine ähnliche Ausgangslage wie bei Lithium-Ionen-Batterien liegt bei sogenannten Supercaps vor. Dies sind Doppelschichtkondensatoren mit sehr hoher Kapazität aber für Kondensatoren eher geringer Leistung. Auch hier werden dem Aktivmaterial, typischerweise spezielle Aktivkohlen, häufig Leitfähigkeitsadditive zugesetzt. Ebenso wie bei den Lithium-Ionen-Batterien bewirken diese eine Verringerung der effektiven Kapazität, weil sie selbst nicht oder nur gering zur Kapazität beitragen.

Auch bei diesen Kondensatoren werden häufig Ruße, manchmal Graphite und in der Literatur auch andere Kohlenstoffformen wie Nanotubes oder dergleichen eingesetzt. Bei gegenwärtigen Elektroden für Lithium-Ionen-Batterien wie auch bei solchen für Doppelschichtkondensatoren ist immer ein Kompromiss zwischen hoher Leistungsfähigkeit und hoher Kapazität notwendig. Eine hohe Leistungsfähigkeit benötigt eine hohe elektronische Leitfähigkeit innerhalb der Elektrode, wofür Leitfähigkeitsadditive wie Ruße und Graphite eingesetzt werden. Diese Additive tragen jedoch nicht zur Kapazität bei, so dass Zellen mit möglichst hoher Kapazität einen niedrigen Anteil dieser Materialien erfordern.

Aufgabe der Erfindung ist es daher, Möglichkeiten bereitzustellen, mit denen gleichzeitig eine hohe Kapazität und eine hohe Leistungsfähigkeit erzielt werden kann.

Diese Aufgabe wird erfindungsgemäß gelöst durch das Verfahren zur Herstellung einer Suspension für die Herstellung von Elektroden mit den Merkmalen gemäß dem unabhängigen Patentanspruch 1, sowie die besonderer Verwendung mit den Merkmalen gemäß dem unabhängigen Patentanspruch 8. Weitere Merkmale und Details der Erfindung ergeben sich aus den Unteransprüchen, der Beschreibung sowie den Beispielen. Dabei gelten Merkmale und Details, die im Zusammenhang mit einem Erfindungsaspekt beschreiben sind, selbstverständlich vollumfänglich stets auch im Zusammenhang mit den jeweils anderen Erfindungsaspekten, und umgekehrt, so dass das bezüglich eines Erfindungsaspekt Gesagte stets im vollen umfang auch im Zusammenhang mit den anderen Erfindungsaspekten als offenbart gilt.

Ein Grundgedanke der vorliegenden Erfindung besteht darin, dass ein gleichzeitiges Einmischen von kohlenstoffbasierten Leitfähigkeitsadditiven mit Aktivmaterialien in die Suspension zur Elektrodenherstellung erfolgt. Dabei wird bevorzugt ein Mischverfahren ausgewählt, das den Eigenschaften aller verwendeten Materialien gerecht wird.

Gemäß dem ersten Aspekt der Erfindung wird ein Verfahren zum Herstellen einer Suspension für die Herstellung von Elektroden bereitgestellt, wobei Festkörper in einer Flüssigkeit fein verteilt werden. Das Verfahren ist dadurch gekennzeichnet, dass als Festkörper kohlenstoffbasierte Leitfähigkeitsadditive und Aktivmaterialien eingesetzt werden und dass die kohlenstoffbasierten Leitfähigkeitsadditive und die Aktivmaterialien gleichzeitig in die Flüssigkeit eingebracht, insbesondere in diese eingemischt, werden, gemäß Anspruch 1. Das Verfahren ermöglicht insbesondere die Herstellung einer Suspension zur Herstellung von Elektroden für elektrochemische Systeme mit besonders vorteilhaften Eigenschaften.

Das Verfahren dient zur Herstellung einer Suspension, die auch als Slurry bezeichnet wird. Eine Suspension ist insbesondere ein heterogenes Stoffgemisch aus einer Flüssigkeit und darin fein verteilten Feststoffen. Das Stoffgemisch wird aufgeschlämmt und die Feststoffe werden nach Möglichkeit in der Schwebe gehalten. Bei einer Suspension handelt es sich beispielsweise um eine grobdisperse Dispersion. Bei einer Dispersion werden Feststoffe mit einer Flüssigkeit benetzt. Die Feststoffe werden in einzelnen Teilchen verteilt und stabilisiert. Dabei helfen insbesondere Netzmittel und Dispergiermittel. Diese reduzieren insbesondere die Grenzflächenspannung und fördern die Benetzung.

Vorzugsweise werden als Aktivmaterialien solche Materialien in die Flüssigkeit eingebracht, für die eine Zerkleinerung während des Einbringvorgangs, insbesondere während des Mischens, nicht nachteilig ist und/oder die bereits beim Einbringen nanoskalig sind. Dies können für Lithium-Ionen-Batterien beispielsweise Materialien wie Titandioxid auf Seiten der Anode oder Lithiumeisenphosphat auf Seiten der Kathode sein, oder dies kann beispielsweise Aktivkohle für den Einsatz in Doppelschichtkondensatoren sein, ohne dass die Erfindung auf diese Materialien beschränkt wäre. Für diese Materialien sind sehr viele Arten von Dispergierverfahren geeignet, insbesondere auch solche, die mir hohen Energien und hohen Scherraten arbeiten.

Jedoch sind auch Materialien wir Graphit oder Lithiumcobaltoxid geeignet, wenn man weniger beanspruchende Mischverfahren wählt. Hochenergetische und hochscherende Mischverfahren können die Struktur dieser Materialien verändern, beispielsweise können die sphärischen oder kartoffelförmigen Partikel auseinandergerissen werden und ihre Oberfläche erhöht werden.

Vorzugsweise werden als kohlenstoffhaltige Leitfähigkeitsadditive Kohlenstoff-Nanomaterialien, insbesondere Kohlenstoff-Nanotubes, oder Kombinationen aus Kohlenstoff-Nanomaterialien mit anderen Leitfähigkeitsadditiven in die Flüssigkeit eingebracht. Bei einem Leitfähigkeitsadditiv handelt es sich insbesondere um einen Zusatz, der die Leitfähigkeit, insbesondere die thermische und/oder elektrische Leitfähigkeit, beeinflusst, insbesondere verbessert.

Kohlenstoff-Nanotubes werden als Leitfähigkeitsadditiv eingesetzt. Aufgrund ihrer Morphologie und ihres Aspektverhältnisses, das deutlich größer als die von Rußagglomeraten oder Graphiten ist und durchaus Werte bis 10000 erreichen kann, sind Nanotubes besonders gut zur Herstellung von Netzwerken hoher elektrischer Leitfähigkeit geeignet. Die Dispergierverfahren, die zum Einsatz kommen können, müssen zum Aufbrechen der Nanotube-Agglomerate geeignet sein, ohne die Nanotubes selbst zu stark zu schädigen.

Als kohlenstoffhaltige Leitfähigkeitsadditive werden gereinigte Nanotubes eingesetzt. Bei diesen Nanotubes wurde eventuell vorhandenes Katalysatormaterial durch geeignete Methoden weitestgehend entfernt, so dass es in den Elektroden keine störende katalytische Wirkung mehr entfalten kann.

Als kohlenstoffhaltige Leitfähigkeitsadditive werden funktionalisierte Nanotubes eingesetzt, beispielsweise solche mit Hydroxyl-Gruppen, Carboxyl-Gruppen oder anderen funktionellen Gruppen.

Weiterhin können auch Kombinationen von Kohlenstoff-Nanotubes und anderen Leitfähigkeitsadditiven wie Rußen, Graphiten, Fullerenen, Graphenen oder dergleichen verwendet werden.

Natürlich sind auch Kombinationen verschiedener kohlenstoffhaltiger Leitfähigkeitsadditive möglich, insbesondere beliebige Kombinationen aus den vorstehend genannten Materialien.

In weiterer Ausgestaltung können die kohlenstoffhaltigen Leitfähigkeitsadditive und Aktivmaterialien in eine wässrige Lösung und/oder in ein Lösemittel und/oder in ein Bindemittel eingebracht werden und/oder es wird ein Bindemittel in die Flüssigkeit zugegeben. Für die Erfindung ist es unerheblich, ob die Dispergierung wässrig oder in einem Lösemittel erfolgt. Auch die Natur des Lösemittels ist für die Erfindung nicht wichtig, jedoch sind die gängigsten Lösemittel NMP, NEP, Aceton und Wasser alle geeignet. Auch der verwendete Binder kann frei ausgewählt und dem Lösemittel angepasst werden, ohne dass die Erfindung hierdurch beeinträchtigt würde. Schließlich ist auch der Einsatz von Additiven möglich, sofern diese elektrochemisch mit dem Gesamtsystem verträglich sind.

Bevorzugt kann in die Flüssigkeit wenigstens ein weiteres Additiv, insbesondere wenigstens ein Dispergiermittel, eingebracht werden. Bei solchen Additiven handelt es sich bevorzugt um Materialien, die die optimale Durchmischung von nicht mischbaren Phasen ermöglichen und stabilisieren. Die Erfindung ist hier nicht auf bestimmte Additive beschränkt.

In weiterer Ausgestaltung erfolgt die Einbringung der kohlenstoffbasierten Leitfähigkeitsadditive und der Aktivmaterialien in die Flüssigkeit, und optional auch der weiteren Additive, mittels eines Mischverfahrens und/oder eines Dispergierverfahrens. Bei einem Dispergierverfahren handelt es sich insbesondere um ein Verfahren zur Herstellung von Suspensionen.

Die einzusetzenden Dispergiermethoden sind beispielsweise dahingehend auszuwählen, dass die Agglomerationen der Nanotubes aufgebrochen werden können, ohne die Nanotubes selbst zu schädigen. Gleichzeitig muss darauf geachtet werden, die Eigenschaften der Aktivmaterialien durch den Dispergierprozess nicht zu beeinträchtigen. So wird Graphit als Aktivmaterial für die Anode beispielsweise als Pulver aus sphärischen oder kartoffelförmigen Partikeln eingesetzt, um eine niedrige Oberfläche zu erzielen, die möglichst wenig mit dem Elektrolyten interagieren kann. Ähnliches gilt für bestimmte Kathodenmaterialien wie Lithiumcobaltoxid. Unter Einsatz hoher Scherkräfte können diese Morphologien geschädigt und aufgebrochen werden, so dass die elektrochemischen Eigenschaften sich verschlechtern.

Bevorzugt erfolgt die Einbringung der kohlenstoffbasierten Leitfähigkeitsadditive und der Aktivmaterialien in die Flüssigkeit, und optional auch der weiteren Additive, unter hohem Druck und/oder hohen Scherkräften.

Die Verfahren gemäß der vorstehenden Erfindungsaspekte können für die Herstellung für Elektroden für Lithium-Ionen-Batterien oder für Doppelschichtkondensatoren ausgebildet sein.

Bevorzugt wird eine mittels eines wie vorstehend beschriebenen erfindungsgemäßen Verfahrens hergestellte Suspension als Ausgangsmaterial für eine Elektrode, insbesondere eine Elektrode für Lithium-Ionen-Batterien oder für Doppelschichtkondensatoren, verwendet.

Ein wie vorstehend beschriebenes erfindungsgemäßen Verfahren zum Herstellen einer Suspension für die Herstellung von Elektroden, oder ein wie vorstehend beschriebenes erfindungsgemäßen Verfahren zum Herstellen einer Elektrode, oder eine wie vorstehend beschriebene erfindungsgemäße Elektrode, oder eine wie vorstehend beschriebene erfindungsgemäße Verwendung ist bevorzugt dadurch gekennzeichnet, dass wenigstens eines oder mehrere in den Ansprüchen, der Beschreibung, sowie den Beispielen genannte(s) Merkmal(e) vorgesehen ist/sind.

Vorteil der erfindungsgemäß hergestellten Elektroden ist insbesondere ihre hohe Leistung beziehungsweise Strombelastbarkeit. Weiterhin erreichen die Elektroden höhere spezifische Kapazitäten als anders hergestellte Elektroden, weil der Anteil an Leitfähigkeitsadditiv verringert werden kann. Zudem ist in der bevorzugten Ausführungsform mit entsprechenden Aktivmaterialien eine gemeinsame Einmischung dieser Aktivmaterialien und der kohlenstoffhaltigen Leitfähigkeitsadditive, beispielsweise Nanotubes, unter Kosten- und Zeitvorteilen möglich. Schließlich können über die Erfindung Feststoffgehalte erreicht werden, die eine kommerzielle Produktion von entsprechenden Zellen in großen Stückzahlen erlauben.

Nachfolgend wird die Erfindung anhand einiger Ausführungsbeispiele in größerem Detail erläutert.

### Ausführungsbeispiel 1 (Anode einer Lithium-Ionen-Batterie):

92 Teile Titandioxid, 5 Teile Binder, 2 Teile CNT (Carbon Nanotubes) und ein Teil Ruß werden mit 100 Teilen Wasser in Kontakt gebracht und benetzt. Danach wird die Mischung unter hohem Druck und hohen Scherkräften dispergiert. Es entsteht eine viskose Dispersion, die gut zu Elektroden verarbeitbar ist. Die aus der Dispersion hergestellten Elektroden weisen eine sehr hohe elektrische Leitfähigkeit auf und zeigen im elektrochemischen Test über viele hundert Zyklen eine hohe spezifische Kapazität, die kaum absinkt. Auch bei höheren und hohen Strombelastungen sinkt die spezifische Kapazität nur wenig ab und ist bei niedrigeren Belastungen wieder vollständig regeneriert.

### Ausführungsbeispiel 2 (Kathode einer Lithium-Ionen-Batterie):

94 Teile nanoskaliges Lithiumeisenphosphat, 4 Teile Binder und 2 Teile CNT werden wie in Beispiel 1 mit NMP benetzt und dispergiert. Auch hier zeigen sich Werte für Zyklenstabilität, Strombelastbarkeit und Kapazität, die diejenigen von anders hergestellten Elektroden gleicher Zusammensetzung übertreffen.

### Ausführungsbeispiel 3 (Anode einer Lithium-Ionen-Batterie):

1 Teil CNT wird mit 50 Teilen NEP wie in Beispiel 1 benetzt und dispergiert. In diese Vordispersion werden 94 Teile sphärischer Graphit, 4 Teile Binder und 1 Teil Ruß sowie weitere 50 Teile NEP gegeben und durch starkes Schleudern miteinander vermischt. Wiederum entsteht eine gut prozessierbare Dispersion, aus der sich Elektroden mit den oben genannten vorteilhaften Eigenschaften herstellen lassen.

### Ausführungsbeispiel 4 (Elektrode eines Doppelschichtkondensators):

Aktivkohle und CNT werden in einem geeigneten Verhältnis mit einem Binder und einem Lösungsmittel oder mit einer Binderdispersion benetzt. Diese Vormischung wird wie in Beispiel 1 unter hohem Druck und hohen Scherkräften dispergiert und zu einer Elektrode verarbeitet. Die Elektrode zeigt eine sehr hohe elektrische Leitfähigkeit und im elektrochemischen Test hervorragende Eigenschaften.

## Patentansprüche

1. Verfahren zum Herstellen einer Suspension für die Herstellung von Elektroden, wobei Festkörper in einer Flüssigkeit fein verteilt werden, **dadurch gekennzeichnet, dass** als Festkörper kohlenstoffbasierte Leitfähigkeitsadditive und Aktivmaterialien eingesetzt werden und dass die kohlenstoffbasierten Leitfähigkeitsadditive und die Aktivmaterialien gleichzeitig in die Flüssigkeit eingebracht, insbesondere in diese eingemischt, werden, wobei die kohlenstoffhaltigen Leitfähigkeitsadditive Kohlenstoff-Nanotubes umfassen und die Aktivmaterialen ausgewählt sind aus der Gruppe, bestehend aus Titandioxid, Lithiumeisenphosphat, Aktivkohle, Graphit und Lithiumcobaltoxid.

2. Verfahren nach Anspruch 1, **dadurch gekennzeichnet, dass** als Aktivmaterialien solche Materialien in die Flüssigkeit eingebracht werden, für die eine Zerkleinerung während des Einbringvorgangs, insbesondere während des Mischens, nicht nachteilig ist und/oder die bereits beim Einbringen nanoskalig sind.

3. Verfahren nach Anspruch 1 oder 2, **dadurch gekennzeichnet, dass** die kohlenstoffhaltigen Leitfähigkeitsadditive und Aktivmaterialien in eine wässrige Lösung und/oder in ein Lösemittel und/oder in ein Bindemittel eingebracht werden und/oder dass ein Bindemittel in die Flüssigkeit zugegeben wird.

4. Verfahren nach einem der Ansprüche 1 bis 3, **dadurch gekennzeichnet, dass** in die Flüssigkeit wenigstens ein weiteres Additiv, insbesondere wenigstens ein Dispergiermittel, eingebracht wird.

5. Verfahren nach einem der Ansprüche 1 bis 4, **dadurch gekennzeichnet, dass** die Einbringung der kohlenstoffbasierten Leitfähigkeitsadditive und der Aktivmaterialien in die Flüssigkeit, und optional auch der weiteren Additive, mittels eines Mischverfahrens und/oder eines Dispergierverfahrens erfolgt.

6. Verfahren zum Herstellen einer Elektrode, **dadurch gekennzeichnet, dass** zunächst eine Suspension nach einem der Ansprüche 1 bis 5 hergestellt wird und dass die Suspension zu einer Elektrode verarbeitet wird.

7. Verfahren zum Herstellen einer Suspension für die Herstellung von Elektroden gemäß einem der Ansprüche 1 bis 5 oder Verfahren zum Herstellen einer Elektrode gemäß Anspruch 6, **dadurch gekennzeichnet, dass** die Verfahren für die Herstellung für Elektroden für Lithium-Ionen-Batterien oder für Doppelschichtkondensatoren ausgebildet sind.

8. Verwendung einer mittels eines Verfahrens gemäß einem der Patentansprüche 1 bis 5 hergestellten Suspension als Ausgangsmaterial für eine Elektrode, insbesondere eine Elektrode für Lithium-Ionen-Batterien oder für Doppelschichtkondensatoren.

## Claims

1. A process for producing a suspension for the production of electrodes, wherein solids are finely distributed in a liquid, **characterized in that** carbon-based conductivity additives and active materials are used as solids and that the carbon-based conductivity additives and the active materials are simultaneously introduced, in particular mixed, into the liquid, wherein the carbon-containing conductivity additives comprise carbon nanotubes and the active materials are selected from the group consisting of titanium dioxide, lithium iron phosphate, activated carbon, graphite and lithium cobalt oxide.

2. The process according to claim 1, **characterized in that** materials are introduced into the liquid as active materials which are not adversely affected by comminution during the introduction process, in particular during mixing, and/or which are already in nanoscale during the introduction.

3. The process according to claim 1 or 2, **characterized in that** the carbon-containing conductivity additives and active materials are introduced into an aqueous solution and/or into a solvent and/or into a binder and/or that a binder is added into the liquid.

4. The process according to any one of claims 1 to 3, **characterized in that** at least one further additive, in particular at least one dispersant, is introduced into the liquid.

5. The process according to any one of claims 1 to 4, **characterized in that** the introduction of the carbon-based conductivity additives and the active materials, and optionally also the further additives, into the liquid is effected by means of a mixing process and/or a dispersing process.

6. A process for producing an electrode, **characterized in that** first a suspension according to any one of claims 1 to 5 is produced and that the suspension is processed to an electrode.

7. A process for producing a suspension for the production of electrodes according to any one of claims 1 to 5 or a process for producing an electrode according to claim 6, **characterized in that** the processes are designed for producing electrodes for lithium-ion batteries or for double-layer capacitors.

8. Use of a suspension prepared by a process according to any one of claims 1 to 5 as starting material for an electrode, in particular an electrode for lithium-ion batteries or for double-layer capacitors.

## Revendications

1. Procédé de préparation d'une suspension pour la fabrication d'électrodes, selon lequel des corps solides sont répartis finement dans un liquide, **caractérisé en ce que** l'on utilise comme corps solides des additifs de conductivité à base de carbone et des matériaux actifs, et **en ce que** les additifs de conductivité à base de carbone et les matériaux actifs sont introduits en même temps dans le liquide, et sont notamment mélangés à celui-ci, sachant que les additifs de conductivité contenant du carbone comprennent des nanotubes de carbone et que les matériaux actifs sont choisis dans le groupe constitué d'oxyde de titane, de lithium fer phosphate, de charbon actif, de graphite et d'oxyde de cobalt et de lithium.

2. Procédé selon la revendication 1, **caractérisé en ce que** l'on introduit en tant que matériaux actifs des matériaux pour lesquels un broyage au cours de l'opération d'introduction, notamment pendant l'opération de mélange, ne présente pas d'inconvénients, et/ou qui sont déjà à l'échelle nanométrique lors de l'introduction.

3. Procédé selon la revendication 1 ou 2, **caractérisé en ce que** les additifs de conductivité et les matériaux actifs contenant du carbone sont introduits dans une solution aqueuse et/ou dans un solvant et/ou dans un liant, et/ou **en ce que** l'on ajoute un liant au liquide.

4. Procédé selon une des revendications 1 à 3, **caractérisé en ce que** l'on introduit dans le liquide au moins un additif supplémentaire, notamment au moins un agent de dispersion.

5. Procédé selon une des revendications 1 à 4, **caractérisé en ce que** l'introduction des additifs de conductivité à base de carbone et des matériaux actifs dans le liquide et, de manière facultative, également des autres additifs s'effectue au moyen d'un procédé de mélange et/ou d'un procédé de dispersion.

6. Procédé de fabrication d'une électrode, **caractérisé en ce que** l'on prépare d'abord une suspension selon une des revendications 1 à 5 et **en ce que** la suspension est mise en oeuvre pour obtenir une électrode.

7. Procédé de préparation d'une suspension pour la fabrication d'électrodes selon une des revendications 1 à 5 ou procédé de fabrication d'une électrode selon la revendication 6, **caractérisé en ce que** les procédés sont conçus pour la fabrication d'électrodes destinées à des batteries lithium-ion ou à des condensateurs à double couche.

8. Utilisation d'une suspension préparée au moyen d'un procédé selon une des revendications 1 à 5, en tant que matériau de départ pour une électrode, en particulier une électrode destinée à des batteries lithium-ion ou à des condensateurs à double couche.
